# EUROPÄISCHE PATENTSCHRIFT

(11) **EP 2 314 266 B1**
(45) Veröffentlichungstag und Bekanntmachung des Hinweises auf die Patenterteilung: **20.02.2013**
(21) Anmeldenummer: 09015602.7
(22) Anmeldetag: 17.12.2009
(51) Int. Cl.: A61G 5/14, B62K 3/00

(54) **Fortbewegungsgerät**
Transport device
Appareil de locomotion

(30) Priorität: 02.10.2009 DE 102009048182
(43) Veröffentlichungstag der Anmeldung: 27.04.2011
(73) Patentinhaber: Lorenz, Rolf, 46485 Wesel (DE); Van Berkel, Pieter, 6824 Arnheim (NL); Hofer, Dagmar, 45966 Gladbeck (DE)
(72) Erfinder: Lorenz, Rolf, 46485 Wesel (DE)
(74) Vertreter: Behrendt, Arne

(56) Entgegenhaltungen:
- GB-A- 2 109 321
- US-A- 4 390 076
- US-A- 4 524 988
- US-A- 4 809 997
- US-A- 5 096 008
- US-A1- 2003 227 161
- US-A1- 2010 114 468

## Beschreibung

Die Erfindung betrifft ein Fortbewegungsgerät zur Fortbewegung einer Person in stehender Position, wobei das Fortbewegungsgerät eine Standfläche, mindestens zwei Räder und eine Halte- und Steuervorrichtung aufweist.

Fortbewegungsgeräte der angegebenen Art sind nach dem Stand der Technik bekannt. Bisher werden diese Fortbewegungsgeräte, wie z. B. ein in der Druckschrift US D551 722S beschriebenes, ausschließlich stehend ohne Hilfsmittel zur Abstützung des Körpers benutzt. Somit ist es bislang querschnittsgelähmten Personen nicht möglich, ein solches Gerät zur Fortbewegung zu nutzen. Insbesondere für querschnittsgelähmte Personen mit nahezu unveränderter Bewegungsfähigkeit im Oberkörper ist es jedoch wichtig und wünschenswert, sich eine gewisse Selbständigkeit im Alltag zu bewahren, wozu in ganz entscheidendem Maße auch die räumliche Mobilität zählt. Dabei ist es auch besonders wichtig, sich nicht wie in Rollstühlen ausschließlich sitzend fortzubewegen, sondern aufrecht stehend. So ist es dem Fahrer des Fortbewegungsgeräts möglich, anderen Menschen in Augenhöhe zu begegnen und an höher liegende, für einen Rollstuhlfahrer nicht zu erreichende, Stellen zu gelangen. Hier soll insbesondere an den Einkauf in Supermärkten, Bedienung von Automaten etc., gedacht sein. Überdies hat eine Fortbewegung im Stand auch einen großen körperlichen Nutzen für den Fahrer. Durch die aufrechte Position werden Gleichgewichtssinn und Koordination geschult sowie Durchblutung und Stoffwechsel angeregt. Ebenso ist es für hauptsächlich sitzende Personen sehr wichtig, das Gesäß zu entlasten, um Wundsein vorzubeugen. Eine nicht zu unterschätzende positive Wirkung der stehenden Fortbewegung ist auch der Einfluss auf das Selbstvertrauen des querschnittsgelähmten oder körperbehinderten Fahrers und die damit verbundene Motivation zu weiteren therapeutisch wertvollen Maßnahmen. Ein gewöhnlicher Rollstuhl mit Stehhilfe kann diese Funktionen nicht leisten, da die Stehhilfe dort nur zum Stehen oder Aufstehen an sich dient und nicht zur stehenden Fortbewegung über lange Strecken.

Es ist deshalb Aufgabe der Erfindung, ein Fortbewegungsgerät der angegebenen Art so auszubilden, dass körperlich behinderte Personen und insbesondere querschnittsgelähmte Personen das Fortbewegungsgerät sicher benutzen können.

Zur Lösung dieser Aufgabe schlägt die Erfindung ein Fortbewegungsgerät vor, mit einem Aufsatz zur Fixierung des Körpers der Person an dem Fortbewegungsgerät.

Mit Hilfe dieses Aufsatzes kann der körperbehinderte oder querschnittsgelähmte Fahrer seinen Körper an dem Fortbewegungsgerät fixieren oder fixieren lassen. Hierdurch wird eine sichere Fahrt möglich und die Gefahr eines Gleichgewichtsverlustes oder gar Sturzes erheblich reduziert.

Zweckmäßig weist der Aufsatz ein Trittblech mit Fersenfixierung auf, Pelotten zur Stützung des Körpers, einen Sattel und einen Halterahmen mit Standfüßen und Geländer.

Die Fixierung des Körpers kann grundsätzlich an unterschiedlichen Stellen erfolgen. Als besonders zweckmäßig hat es sich herausgestellt, das Trittblech so auszugestalten, dass eine Fersenfixierung dafür sorgt, dass die Füße in ihrer Position bleiben und nicht vom Trittblech herabrutschen können. Mit Hilfe von Pelotten hat der Fahrer eine Möglichkeit, sich anzulehnen und somit den Körper zu stabilisieren. Ein Sattel kann unterstützend verwendet werden, um z. B. das Gewicht, welches auf die Beine wirkt, zu reduzieren. Ein Halterahmen hat zum einen die Funktion, über Standfüße Kontakt zum Boden herzustellen, und zum anderen ein Geländer bereitzustellen, an welchem sich der Fahrer beim Aufoder Absteigen auf oder von dem Gerät festhalten kann.

Besonders vorteilhaft ausgebildet ist der Aufsatz, wenn die Pelotten zur Stützung des Körpers Schienbeinpelotten und/oder eine Schambeinpelotte und/oder eine Brustpelotte sind. Zum Anlehnen des Körpers haben sich für den Fahrer bestimmte Positionen der Pelotten als besonders vorteilhaft erwiesen. Hierzu zählen Schienbeinpelotten zur Abstützung des Unterschenkels, eine Schambeinpelotte zur Fixierung des Unterleibs, speziell in Verbindung mit einem Sattel, und/oder eine Brustpelotte zum Anlehnen des Oberkörpers.

Es ist vorgesehen, dass der Aufsatz an den Schutzblechen des Fortbewegungsgeräts angeordnet ist. Durch diese Bauweise hat der Aufsatz einen großflächigen und sicheren Kontakt zu dem Fortbewegungsgerät.

Vorteilhaft im Sinne der Erfindung ist es, dass die Standfüße des Halterahmens relativ zum Boden bewegbar sind. Die Standfüße können dabei so mit dem übrigen Halterahmen verbunden sein, dass sie weggeklappt, weggeschoben oder auf andere Art und Weise vom Boden lösbar sind. Eine aufwendige Montage der Standfüße an den Halterahmen für die Situation des Auf- oder Absteigens auf oder von dem Fortbewegungsgerät wird somit vermieden. Ebenso sind die Standfüße jederzeit während der Fahrt an Bord und somit verfügbar.

Eine besonders vorteilhafte Ausgestaltung der Erfindung ist, dass die Elemente des Aufsatzes höhenverstellbar und/oder tiefenverstellbar und/oder drehbar gelagert sind. Somit wird eine leichte Anpassung der Geometrie des Aufsatzes an die Körpermaße des Fahrers möglich.

Eine zusätzliche Variante der Erfindung ist es, dass dem Sattel eine als Aufstehhilfe dienende Liftvorrichtung zugeordnet ist, die den Sattel von einer für das Sitzen geeigneten Position in eine für das Stehen geeignete Position anhebt und den Sattel (11) von einer für das Stehen geeigneten Position in eine für das Sitzen geeignete Position herablässt. Hierdurch wird es dem Fahrer ermöglicht, selbständig das Fortbewegungsgerät zu besteigen und von einer sitzenden in eine stehende Position und zurück zu gelangen. Die Hilfe einer dritten Person wird hierdurch überflüssig.

Es ist vorgesehen, dass die Liftvorrichtung ein Verschiebesystem mit Schienen und/oder Teleskopstangen aufweist, auf dem eine dem Sattel zugeordnete Vorrichtung verschiebbar angeordnet ist. Ein solches Verschiebesystem ermöglicht eine gleichmäßige und stabil geführte Verschiebung des Sattels.

Zweckmäßig weist die Liftvorrichtung ein Antriebssystem mit einer Spindel und/oder einem Seilzug und/oder einer Kettenförderung auf. Ebenso empfiehlt es sich, dass das Antriebssystem elektrisch oder elektrisch-hydraulisch betätigbar ist. Somit ergibt sich eine bequeme und Kraft schonende Betätigung der Liftvorrichtung mit gängigen Antriebsmitteln.

Die Erfindung sieht vor, dass der Liftvorrichtung ein Stangensystem zugeordnet ist, wobei das Stangensystem Verschiebesystem und Antriebssystem miteinander verbindet. Dieses Stangensystem kann aus Metall und/oder Kunststoff hergestellt sein. Die Verbindungen der einzelnen Stangen umfassen Gelenke und Drehpunkte und sorgen für eine Stabilisierung der gesamten Liftvorrichtung.

Ein Ausführungsbeispiel der Erfindung wird im Folgenden anhand der Zeichnungen näher erläutert. Es zeigen:
- Figur 1: ein Fortbewegungsgerät mit Aufsatz in 3D- Ansicht,

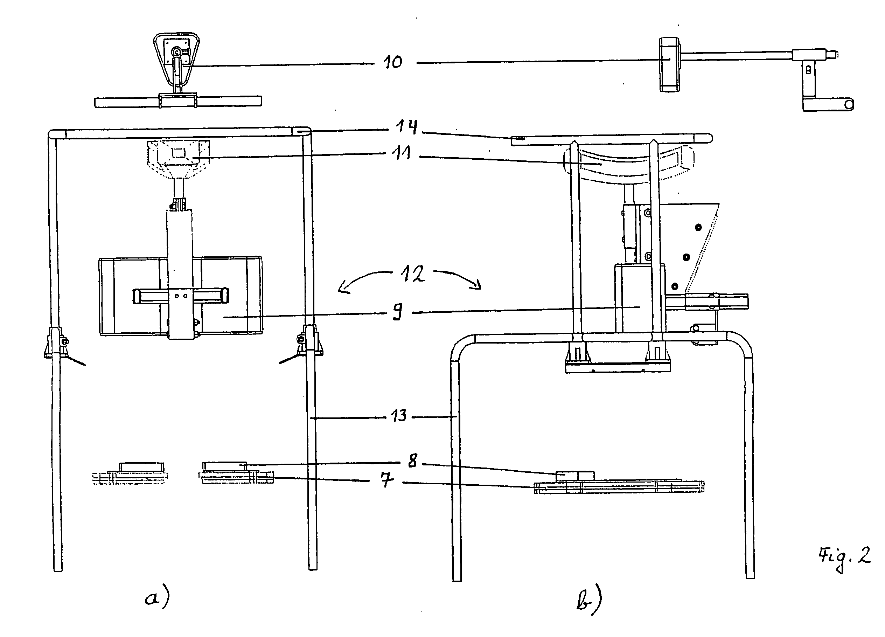

- Figur 2: einen Aufsatz in Front a)- und Seitenan- sicht b) und
- Figur 3: einen Aufsatz mit Aufstehhilfe in Draufsicht a) und Seitenansicht b).

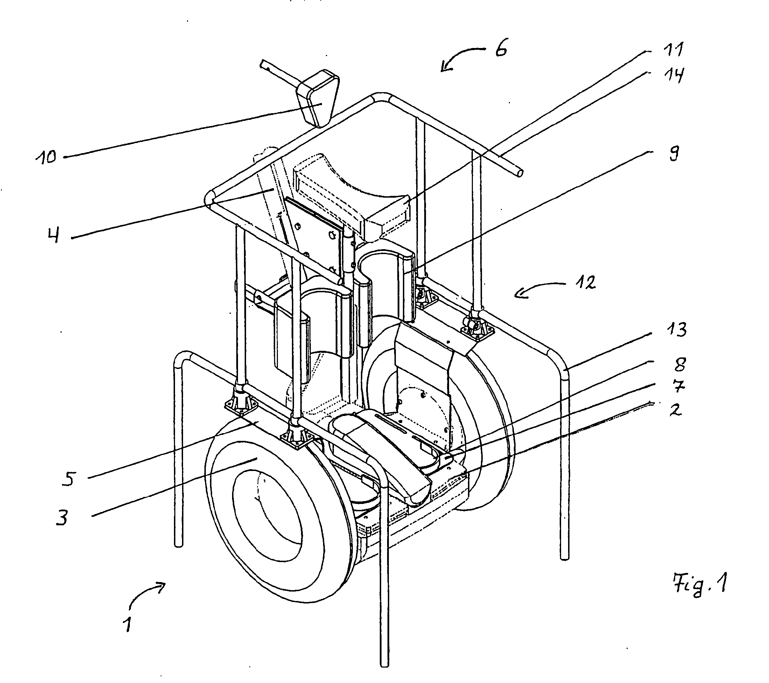

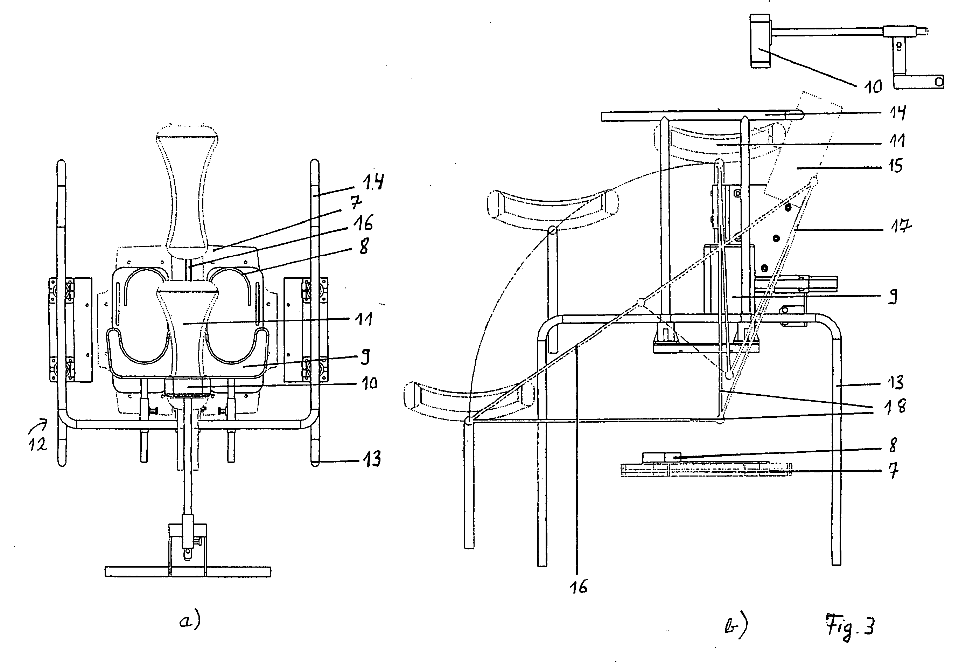

In Figur 1 ist eine Variante eines Fortbewegungsgerätes 1 dargestellt, welches über eine Standfläche 2, Räder 3 und eine Halte- und Steuervorrichtung 4 verfügt. An der Grundkonstruktion dieses Fortbewegungsgerätes 1 wird ggf. unter Zuhilfenahme der Schutzbleche 5 der erfindungsgemäße Aufsatz befestigt. Der Aufsatz 6 verfügt beispielsweise über ein Trittblech 7 mit Fersenfixierung 8 sowie über zwei Schienbeinpelotten 9, eine Schambeinpelotte 10 und einen Sattel 11. Der Halterahmen 12 des Aufsatzes 6 besteht aus zwei Standfüßen 13, welche an dem Halterahmen 12 bewegbar angeordnet sind. Ein Geländer 14 umgibt das Fortbewegungsgerät 1. In Figur 3b ist zusätzlich eine Liftvorrichtung 15 dargestellt, welche den Sattel 11 auf einem Verschiebesystem 16 von der sitzenden in die stehende Position und zurück verschiebt. Dem Verschiebesystem 16 ist ein Antriebssystem 17 zugeordnet. Antriebssystem 17 und Verschiebesystem 16 sind über ein Stangensystem 18 stabilisierend miteinander verbunden.

Die Erfindung funktioniert so, dass die körperbehinderte oder querschnittsgelähmte Person vor dem Fortbewegungsgerät 1 sitzt oder mit Hilfe einer dritten Person steht. Der erfindungsgemäße Aufsatz 6 ist dabei an das Fortbewegungsgerät 1 montiert. Nun setzt sich die Person entweder auf den Sattel 11 der Liftvorrichtung 15 in der niedrigsten Position oder wird mit Hilfe der dritten Person auf das Trittblech 7 der Standfläche 2 gestellt. Im ersten Fall bewegt sich der Sattel 11 mit Hilfe des zugeordneten Antriebssystems 17 über ein Verschiebesystem 16 in die stehende Position, im zweiten Fall stellt sich der Fahrer direkt so auf das Trittblech 7, dass er auf dem Sattel 11 in der stehenden Position eine Stütze hat. In dieser Phase des Aufsteigens auf das Fortbewegungsgerät 1 sind die Standfüße 13 des Halterahmens 12 mit dem Boden in Kontakt. Der Fahrer lehnt sich nun mit den Unterschenkeln an die Schienbeinpelotte 9 und mit dem Unterkörper an die Schambeinpelotte 10. Die Füße stehen auf dem Trittblech 7 und werden mit Hilfe der Fersenfixierung 8 in ihrer Position gehalten. Gleichzeitig hält sich der Fahrer mit den Händen an der Halte- und Steuervorrichtung 4 des Fortbewegungsgeräts 1 fest. Wenn der Fahrer sich auf diese Weise gesichert hat, werden die Standfüße 13 vom Boden gelöst und am Halterahmen 12 festgelegt. Das Fortbewegungsgerät 1 kann nun bestimmungsgemäß genutzt werden.

## Patentansprüche

1. Einachsiges Fortbewegungsgerät (1) zur Fortbewegung einer Person in stehender Position, wobei das Fortbewegungsgerät (1) eine Standfläche (2), zwei Räder (3) und eine Halte- und Steuervorrichtung (4) aufweist,
**gekennzeichnet durch**
einen Aufsatz (6) zur Fixierung des Körpers der Person an dem Fortbewegungsgerät (1), wobei der Aufsatz (6) ein Trittblech (7) mit Fersenfixierung (8), Pelotten (9, 10) zur Stützung des Körpers, einen Sattel (11) und einen Halterahmen (12) mit Standfüßen (13) und Geländer (14) aufweist.

2. Fortbewegungsgerät (1) nach Anspruch 1, **dadurch gekennzeichnet, dass** die Pelotten zur Stützung des Körpers Schienbeinpelotten (9) und/oder eine Schambeinpelotte und/oder eine Brustpelotte (10) sind.

3. Fortbewegungsgerät (1) nach Anspruch 1 oder 2, **dadurch gekennzeichnet, dass** der Aufsatz (6) an der Grundkonstruktion und/oder an den Schutzblechen (5) des Fortbewegungsgerätes (1) befestigt ist.

4. Fortbewegungsgerät (1) nach einem der Ansprüche 1 bis 3, **dadurch gekennzeichnet, dass** die Standfüße (13) des Halterahmens (12) relativ zum Boden bewegbar sind.

5. Fortbewegungsgerät (1) nach einem der Ansprüche 1 bis 4, **dadurch gekennzeichnet, dass** die Elemente des Aufsatzes (6) höhenverstellbar und/oder tiefenverstellbar und/oder drehbar gelagert sind.

6. Fortbewegungsgerät (1) nach einem der Ansprüche 1 bis 5, **dadurch gekennzeichnet, dass** dem Sattel (11) eine als Aufstehhilfe dienende Liftvorrichtung (15) zugeordnet ist, die den Sattel (11) von einer für das Sitzen geeignete Position in eine für das Stehen geeignete Position anhebt und den Sattel (11) von einer für das Stehen geeigneten Position in eine für das Sitzen geeigneten Position herablässt.

7. Fortbewegungsgerät (1) nach Anspruch 6, **dadurch gekennzeichnet, dass** die Liftvorrichtung (15) ein Verschiebesystem (16) mit Schienen und/oder Teleskopstangen aufweist, auf dem eine dem Sattel (11) zugeordnete Vorrichtung verschiebbar angeordnet ist.

8. Fortbewegungsgerät (1) nach Anspruch 6 oder 7, **dadurch gekennzeichnet, dass** die Liftvorrichtung (15) ein Antriebssystem (17) mit einer Spindel und/oder einem Seilzug und/oder einer Kettenförderung aufweist.

9. Fortbewegungsgerät nach Anspruch 8, **dadurch gekennzeichnet, dass** das Antriebssystem (17) elektrisch oder elektrisch-hydraulisch betätigbar ist.

10. Fortbewegungsgerät nach einem der Ansprüche 8 bis 9, **dadurch gekennzeichnet, dass** der Liftvorrichtung (15) ein Stangensystem (18) zugeordnet ist, wobei das Stangensystem (18) Verschiebesystem (16) und Antriebssystem (17) miteinander verbindet.

## Claims

1. Single-axle transportation device (1) for moving a person in a standing position, wherein the transportation device (1) has a platform (2), two wheels (3) and a holding and control device (4),
**characterized by**
an attachment (6) for securing the body of the person on the transportation device (1), wherein the attachment (6) has a footboard (7) with heel fixing (8), pads (9, 10) for supporting the body, a saddle (11) and a holding frame (12) with feet (13) and handrails (14).

2. Transportation device (1) according to claim 1, **characterized in that** the pads for supporting the body are shin pads (9) and/or a pelvic pad and/or a chest pad (10).

3. Transportation device (1) according to claim 1 or 2, **characterized in that** the attachment (6) is secured to the base structure and/or to the guard plates (5) of the transportation device (1).

4. Transportation device (1) according to one of claims 1 to 3, **characterized in that** the feet (13) of the holding frame (12) are movable relative to the ground.

5. Transportation device (1) according to one of claims 1 to 4, **characterized in that** the elements of the attachment (6) are mounted height-adjustable and/or depth-adjustable and/or rotatable.

6. Transportation device (1) according to one of claims 1 to 5, **characterized in that** a lifting device (15) serving as standing aid is allocated to the saddle (11), which raises the saddle (11) from a position suitable for sitting to a position suitable for standing and lowers the saddle (11) from a position suitable for standing to a position suitable for sitting.

7. Transportation device (1) according to claim 6, **characterized in that** the lifting device (15) has a displacement system (16) with rails and/or telescopic rods on which a device allocated to the saddle (11) is arranged displaceable.

8. Transportation device (1) according to claim 6 or 7, **characterized in that** the lifting device (15) has a drive system (17) with a shaft and/or a cable pull and/or a chain conveyor.

9. Transportation device according to claim 8, **characterized in that** the drive system (17) can be operated electrically or electrohydraulically.

10. Transportation device according to one of claims 8 to 9, **characterized in that** a rod system (18) is allocated to the lifting device (15), wherein the rod system (18) connects the displacement system (16) to the drive system (17).

## Revendications

1. Appareil de locomotion (1) à un axe pour le déplacement d'une personne en position débout, où l'appareil de locomotion (1) présente une surface d'appui (2), deux roues (3) et un dispositif de retenue et de commande (4), **caractérisé par** un support (6) pour la fixation du corps de la personne à l'appareil de locomotion (1), où le support (6) présente un marchepied (7) avec fixation de talon (8), pelotes (9, 10) pour le soutien du corps, une selle (11) et un cadre de retenue (12) avec des pieds (13) et garde-corps (14).

2. Appareil de locomotion (1) selon la revendication 1, **caractérisé en ce que** les pelotes pour le soutien du corps sont des pelotes de tibia (9) et/ou une pelote de pubis et/ou une pelote de poitrine (10).

3. Appareil de locomotion (1) selon la revendication 1 ou 2, **caractérisé en ce que** le support (6) est fixé à la construction de base et/ou aux tôles de protection (5) de l'appareil de locomotion (1).

4. Appareil de locomotion (1) selon l'une des revendications 1 à 3, **caractérisé en ce que** les pieds (13) du cadre de retenue (12) sont déplaçables relativement au sol.

5. Appareil de locomotion (1) selon l'une des revendications 1 à 4, **caractérisé en ce que** les éléments du support (6) sont logés d'une manière ajustable en hauteur et/ou en profondeur et/ou tournante.

6. Appareil de locomotion (1) selon l'une des revendications 1 à 5, **caractérisé en ce qu'**il est associé à la selle (11) un dispositif de levage (15) servant d'aide pour se lever, qui relève la selle (11) d'une position appropriée pour être assis à une position appropriée pour être debout et abaisse la selle (11) d'une position appropriée pour être debout dans une position appropriée pour être assis.

7. Appareil de locomotion (1) selon la revendication 6, **caractérisé en ce que** le dispositif de levage (15) présente un système de déplacement (16) avec des rails et/ou des tiges télescopiques, sur lequel est disposé d'une manière déplaçable un dispositif associé à la selle (11).

8. Appareil de locomotion (1) selon la revendication 6 ou 7, **caractérisé en ce que** le dispositif de levage (15) présente un système d'entraînement (17) avec une broche et/ou un câble de commande et/ou un convoyage à chaîne.

9. Appareil de locomotion (1) selon la revendication 8, **caractérisé en ce que** le système d'entraînement (17) est actionnable électriquement ou électriquement-hydrauliquement.

10. Appareil de locomotion (1) selon l'une des revendications 8 à 9, **caractérisé en ce qu'**il est associé au dispositif de levage (15) un système à tiges (18), le système à tiges (18) reliant entre eux le système de déplacement (16) et le système d'entraînement (17).
